(19)

Europäisches
Patentamt

European
Patent Office

Office européen
des brevets

(11) **EP 4 324 718 A2**

(12) **EUROPEAN PATENT APPLICATION**

(43) Date of publication:
**21.02.2024 Bulletin 2024/08**

(21) Application number: **23191940.8**

(22) Date of filing: **17.08.2023**

(51) International Patent Classification (IPC):
**B61L 15/00** $^{(2006.01)}$     **G01N 15/06** $^{(2024.01)}$

(52) Cooperative Patent Classification (CPC):
**B61L 15/0081; G01N 15/0656;** G01N 2015/0046

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.08.2022 IN 202241047105**

(71) Applicant: **ALSTOM Holdings
93400 Saint-Ouen-sur-Seine (FR)**

(72) Inventors:
- **GANESAN, Muniandi
626001 Virudhunagar (IN)**
- **JEEVABHARATHI, Selvaraj
630003 Tamilnadu (IN)**
- **BRAHMANANDAM, Saravanan
560064 Karnataka (IN)**

(74) Representative: **Lavoix
2, place d'Estienne d'Orves
75441 Paris Cedex 09 (FR)**

(54) **SYSTEM AND METHOD FOR COLLECTING AND MONITORING PARTICULATE MATTER PRODUCED BY RAILWAY VEHICLES WHILE TRAVELLING ALONG RAILWAY TRACKS**

(57) System (1) and method (200) for collecting and monitoring particulate matter (PM) produced by a railway vehicle while travelling along a railway track (101), wherein:
- at least one collecting tank (10) suitable to be mounted onboard of a railway vehicle (100), is arranged to collect at least particulate matter produced by the railway vehicle (100) itself along the railway track (101) during one or more travels;
- at least one sensor (20) is arranged to detect the particulate matter collected inside the at least one collecting tank (10) and to output signals (Sc) indicative of the level of concentration of the particulate matter collected during said one or more travels;
- at least one electronic control unit (30) is configured at least to calculate, based on the signals (Sc) outputted by the at least one sensor (20), the level of concentration of the particulate matter (PM) collected inside the at least one collecting tank (10) during said one or more travels.

FIG.1

EP 4 324 718 A2

**Description**

The present invention relates to a system and a method for collecting and monitoring particulate matter produced by railway vehicles while travelling along railway tracks.

The system and method according to the present invention is particularly suitable for being applied to subways lines, and it will be described hereinafter by making particular reference to such application, without intending in any way to limit their possible application to other types of railway lines, such as main railway lines, tramways, and the like.

As known, the definition of particulate matter or "PM" generally refer to polluting substances, which can quite easily infiltrate for example into devices and damage them, and/or can be also unhealthy for human beings when inhaled.

In the field of transportation, although railway vehicles can be considered as very environmental friendly means of transportation, in view of their inherent way of functioning, they are prone to produce particulate matter, in particular of metallic type and more precisely ferruginous particulate matter.

Such ferruginous particles, whose size distribution can vary from ultrafine to fine up to coarse particles, are produced predominantly by mechanical processes of sliding and wear at the contact interfaces between the rails of a track and the wheels of a railway vehicle, by electrical braking, and to a minor extent by high-temperature processes such as sparking.

The particulate matter, and in particular the fine or ultra-fine metals constituents thereof, deposited and accumulated along the tracks and especially in subway tunnels, can spread over the platforms of the railway line, or can penetrate inside the convoys via heating, ventilation, and air-conditioning (HVAC) systems, and may even outflow via the ventilation system from tunnels into the cities.

Thus, in addition to disturb/damage for example electronics equipment on board of travelling convoys, they can negatively contribute to the environmental pollution.

The main aim of the present invention is to face this issue and to provide a solution capable of at least reducing the accumulation of particulate matter while monitoring at the same time the particulate matter produced by a railway vehicle while travelling along a track of a railway line.

This aim is achieved by a system for collecting and monitoring particulate matter produced by a railway vehicle while travelling along a railway track, the system being characterized in that it comprises at least:

- at least one collecting tank suitable to be mounted onboard of a railway vehicle, said at least one collecting tank being arranged to collect at least particulate matter produced by the railway vehicle itself along the railway track during one or more travels;

- at least one sensor which is arranged to detect the particulate matter collected inside the at least one collecting tank and to output signals indicative of the level of concentration of the particulate matter collected during said one or more travels;

- at least one electronic control unit which is configured at least to calculate, based on the signals outputted by the at least one sensor, the level of concentration of the particulate matter collected inside the at least one collecting tank during said one or more travels.

The above-mentioned aim of the present invention is also achieved by a method for collecting and monitoring particulate matter produced by a railway vehicle while travelling along a railway track, the method being characterized in that it comprises at least the following steps:

- collecting, by means of at least one collecting tank suitable to be mounted on board of a railway vehicle, at least particulate matter produced by the railway vehicle itself along the railway track during said one or more travels;

- outputting, by means of at least one sensor which is suitable to detect the particulate matter collected by the at least one collecting tank, signals indicative of the level of concentration of the particulate matter collected;

- calculating, by at least one electronic control unit, based on the signals outputted by the at least one sensor, the level of concentration of collected particulate matter produced by the railway vehicle itself along the railway track during said one or more travels.

Further characteristics and advantages will become apparent from the description of some preferred but not exclusive exemplary embodiments of a system and a method according to the present invention, illustrated only by way of non-limitative examples with the accompanying drawings, wherein:

figure 1 is a block diagram schematically illustrating a system for collecting and monitoring particulate matter produced by a railway vehicle while travelling along a railway track, according to the present invention;

figure 2 is a view schematically showing some components of the system according to the present invention, which are mounted onboard of a railway vehicle;

figure 3 is a view schematically showing some of the components of the system according to the present invention;

figure 4 schematically shows two possible configurations of side barriers usable in the system according to the invention, applied to railway tracks;
figure 5 is a flow chart schematically illustrating a method for collecting and monitoring particulate matter produced by a railway vehicle while travelling along a railway track, according to the present invention.

It should be noted that in the detailed description that follows, identical or similar components, either from a structural and/or functional point of view, may have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", or a similar term is used herein while referring to any component as a whole, or to any part of a component, or to a combination of components, it has to be understood that it means and encompasses correspondingly either the structure, and/or the configuration and/or the form and/or the positioning.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

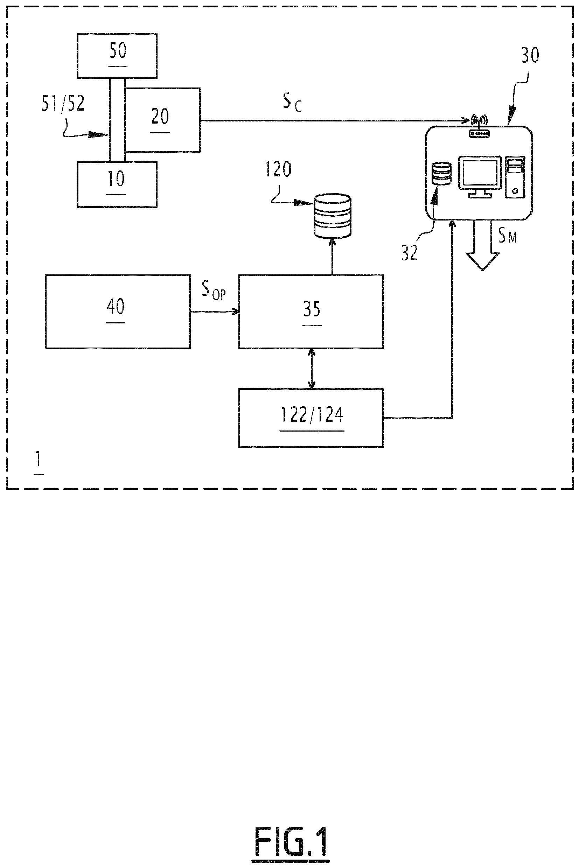

Figure 1 illustrates schematically a system 1 for collecting and monitoring particulate matter ("PM") produced by a railway vehicle while travelling along a railway track.

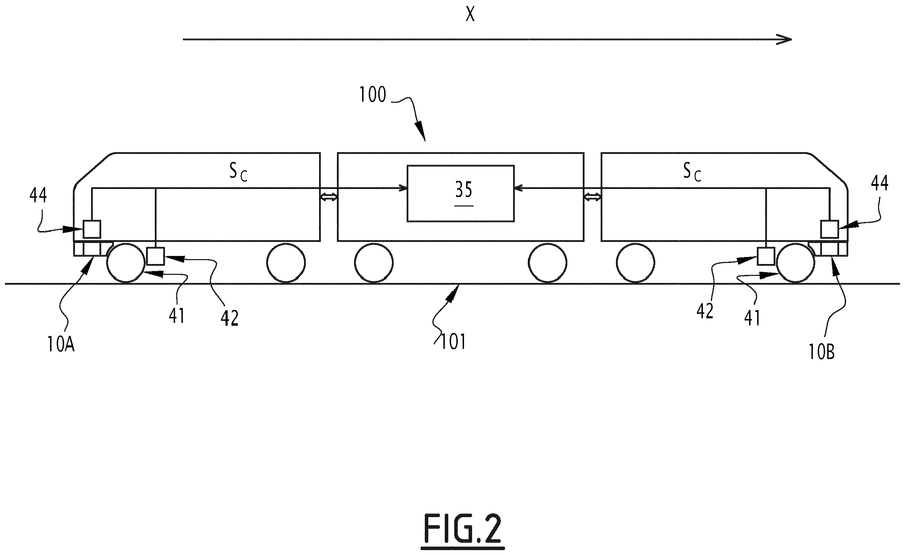

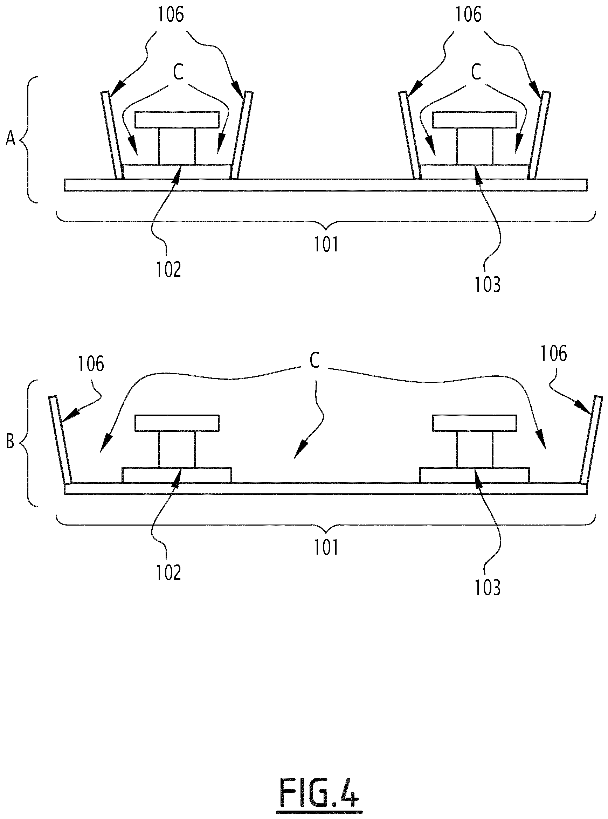

An example of a railway vehicle is illustrated in figure 2 with the reference number 100, which is formed by three units or cars, and is represented while travelling, along the direction X, along a railway track 101 that comprises a left rail and a right rail, indicated in figure 4 by the reference numbers 102 and 103, respectively.

Clearly, such railway vehicle 100 can be any suitable type of railway vehicles, such as a subway convoy, a mainline train, a tram, et cetera, and can be composed by any suitable number and type or units or cars.

The system 1 according to the present invention comprises at least:

- at least one collecting tank 10 suitable to be mounted onboard the railway vehicle 100, in particular at an underside thereof as shown in figure 2, the at least one collecting tank 10 being arranged to collect at least particulate matter PM produced in real time by the railway vehicle 100 itself along the railway track 101 during one or more travels;
- at least one sensor 20 which is suitable to detect the particulate matter collected inside the at least one collecting tank 10 and to output signals Sc indicative of the level of concentration of the particulate matter collected during the one or more travels; and
- at least one electronic control unit 30 which is configured at least to calculate, based on the signals Sc outputted by the at least one sensor 20, the level of concentration of the particulate matter collected inside the at least one collecting tank 10 during the one or more travels.

As a person skilled in the art would readily appreciate, and as it will be described in more details herein after, the at least one electronic control unit 30 can comprise a single control unit or a plurality of electronic control units operatively lined to each other, , e.g. two, each unit comprising a processor or a processor-based device.

In case of a single control unit 30, it can be positioned on board of the railway vehicle or remotely therefrom, e.g. at a trackside remote control center or for example at a center for disposing out the collected particulate matter.

If the at least one control unit 30 is formed by or comprise two or more electronic units, one or more units can be positioned for instance on board of the railway vehicle, and one or more units can be installed at a trackside location.

In one possible embodiment, the at least one electronic control unit 30 comprises a server, hereinafter indicated as the server 30, which is positioned at a trackside location and includes database 32, which contains, among others, a copy of data stored in a trackside traction/brake database installed on board of the railway vehicle 100 and schematically indicated in figure 1 by the reference number 120.

Further, in the exemplary embodiment illustrated, the system 100 comprises a further electronic control unit, indicated in figures 1 and 2 by the reference number 35, which is installed onboard of the railway vehicle 100.

According to a possible embodiment, the at least one sensor 20 comprises or is constituted by a planar inductive coil which senses the change of magnetic permeability in response to the amount of wear emission of particulate matter. Depending on the change in the magnitude of the magnetic permeability, the level of concentration of particulate matter is measured.

More in particular, the planar inductive coil 20 is configured to detect the magnetic permeability of the ferrous wear particles.

In practice, according to solutions known or readily available to those skilled in the art and therefore herein not described in details, the planar inductive coil 20 comprises two coils: an excitation coil 21 and a sensing coil 22. An excitation current is given to the excitation coil, and the inductance associated with the coil is measured on the sensing coil. The change in magnetic permeability due to the presence of ferrouginous particles can vary the inductance measured.

The inductance measured L is given by the following formula:

$$L = \frac{r^2 N^2}{(5r + 7d) \times 10^5} \times \mu_r$$

where, $\mu_r$ is the relative magnetic permeability of the medium (for ferruginous particles about 20), r is the outer radius of the planar inductive coil, d is the depth of the planar inductive coil, and N is the number of turns of the planar inductive coil 20.

The momentary change in inductance can be measured, for example, using any suitable data acquisition card, e.g. a myRIO-1900 card manufactured by National Instruments, or any similar data acquisition card which has for example a very high sampling rate of 500 kHz.

Conveniently, in one possible embodiment of the system 1, the at least one sensor 20 is installed at a trackside location, e.g. at a disposal center or at a depot, as it will be described in more details hereinafter.

Alternatively, if desired the at least one sensor 20 or any additional sensor 20 can be positioned on board of the railway vehicle 100 to output in real time signals $S_C$ indicative of the level of concentration of particulate matter under collection, and especially of ferruginous particles.

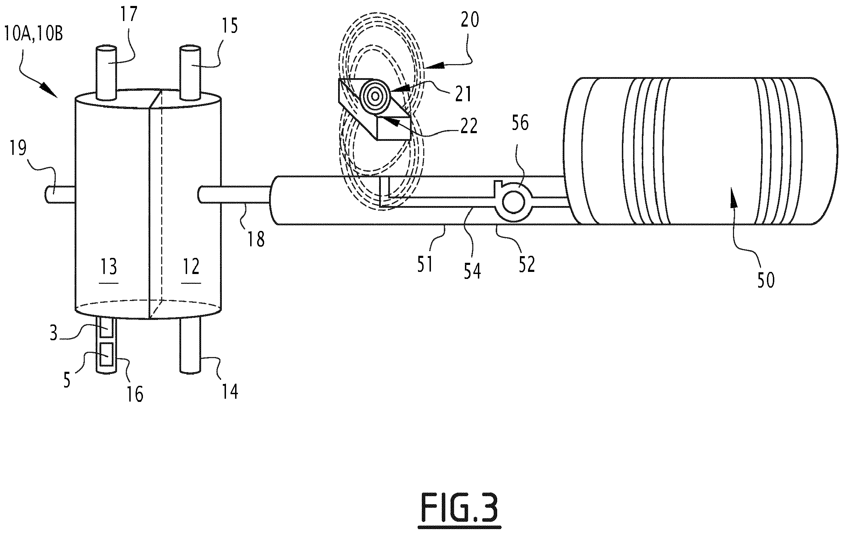

Conveniently, as illustrated in figure 3, the at least one collecting tank 10 comprises a first storing chamber 12 for storing particulate matter produced in real time directly by the railway vehicle 100 itself during the one or more travels along the railway track 101, and a second storing chamber 13 for storing particulate matter previously deposited along the same railway track 101.

The particulate matter previously deposited is formed by residual particulate matter produced by other railways vehicles or by the same railway vehicle 100 in previous travels, left along the track 101.

In particular, the first storing chamber 12 is provided with first and second inlets 14 15, and the second storing chamber 13 is provided with respective first and second inlets 16, 17, wherein the respective first inlets 14 and 16 can collect each particulate matter from an associated rail of the track 101, e.g. the left rail 102, while the respective second inlets 15, 17 can collect each particulate matter from the opposite rail of the track 101, e. g. the right rail 103.

One or more of the inlets 14, 15, 16, 17, preferably each, is provided with an electromagnet and/or an air suction fan, schematically represented in figure 3 by the reference number 3 and 5 only for the inlet 16 for ease of illustration, arranged to push particulate matter to flow into and be collected inside the respective storing chamber 12 and 13.

Further, the first storing chamber 12 is provided with a first outlet 18, and the second storing chamber 13 is provided with a corresponding second outlet 19, said outlets 18 and 19 being suitable for emptying, e.g. at a disposal center, the corresponding first and second storing chambers 12, 13 from the particulate matter therein collected.

According to one possible embodiment, the at least one collecting tank 10 comprises a first collecting tank 10A and a second collecting tank 10B, which are for instance substantially identical to each other, and comprise each a respective first and second storing chambers 12 and 13 with the corresponding four inlets 13, 14, 15 and 16 and two outlets 18 and 19.

Usefully, as illustrated in figure 2, with reference to the travelling direction X of the railway vehicle 100, the first tank 10A is suitable to be mounted at a back end part of the railway vehicle 100 and is adapted to be activated, for example by the electronic control unit 35 installed onboard of the railway vehicle 100, and collect in the first storing chamber 12 particulate matter produced in real time by the railway vehicle 100 itself along the railway track 101, whereas the second collecting tank 10B is suitable to be positioned at the front end part of the railway vehicle 100 and is arranged to be activated and collect, in the second storing chamber 13 the particulate matter previously deposited along the railway track 101.

In one possible embodiment, as illustrated in figure 4, the system 1 further comprises one or more couples of side barriers 106 that are suitable to be installed along at least one portion of the railway track 101, the side barriers 106 being arranged to delimit one or more containment zones C for holding therein particulate matter to be collected.

In particular, in the upper possible configuration A illustrated in figure 4, for each rail 102 and 103 there are provided two corresponding side barriers 106; according to this embedment, the barriers 106 are positioned along the sides of and spaced apart from each rail 102, 103 of the railway track 101, with each couple of barriers 106 delimiting a respective containment area C.

According to the lower configuration B illustrated in figure 4, there is provided only one couple of side barriers 106 which are installed at the external sides of and along one or more portions of the railway track 101 itself, thus delimiting only one common containment area C.

Conveniently, in one possible embodiment, the system 1 further comprises at least one centralized disposal tank, indicated in figures 1 and 3 by the reference number 50, which comprises at least one inlet 52 adapted to be connected to a corresponding outlet 18 or 19 of the respective first or second storing chambers 12 or of 13 of each collecting tank to be emptied.

Usefully, in one possible embodiment the system 1 further comprises at least one further electromagnet and an air suction fan, schematically indicated in figure 3 by the reference number 54 and 56, respectively, which are suitable to be positioned along the inlet 52 suitable to be connected to the outlet 18 or 19, directly, or via the interposition of a connecting conduit 51.

The further electromagnet 54 and the air suction fan 56 are both arranged to cause flows of collected particulate matter previously collected, in particular coarse and fine or ultrafine particles, to flow from the respective first or second storing chambers 12, 13 into the centralized disposal tank 50.

According to one possible embodiment, as schematically illustrated in figure 3, the at least one sensor 20 is suitable to positioned at the inlet 52 or along the conduit 51 to detect the level of concentration of particulate matter, in particular of ferruginous particles, in the flows of particulate matter collected in and flowing out from at least the first storing chamber 12 into the disposal tank 50.

According to a possible embodiment, the system 1 comprises one or more devices, cumulatively indicated by the reference number 40 in figure 1, which are suitable to be mounted onboard of the railway vehicle 100 and are adapted each to output signals $S_{OP}$ indicative of one or more corresponding operative parameters of the railway vehicle 100 during the one or more travels.

In one possible embodiment, as illustrated in figure 1, the signals $S_{OP}$ provided by the or each device 40 are supplied for instance to the electronic control unit 35 installed on onboard of the railway vehicle 100.

The electronic control unit 35 processes the signals received, thus calculating values related to the corresponding operative parameters of the railway vehicle 100.

The calculated values can be transmitted directly to the trackside electronic control unit 30 where they can be stored and used, or they can be stored in the database 120 onboard of the railway vehicle, and the server 30 can host a copy of such database 120 which is timely updated.

As those skilled in the art would appreciate, the database 120 can be further populated with other data, e.g. total distance travelled, acceleration, et cetera.

Alternatively, the signals $S_{OP}$ can be transmitted directly to and processed by the server 30 for calculating the values of the monitored operative parameters of the railway vehicle 100.

In one possible embodiment, the one or more devices 40 comprises at least one temperature sensor, indicated in figure by the reference number 42, which is adapted to detect, in a contactless manner and while the railway vehicle 100 travels along the railway track 101, values of the temperature of at least one wheel 41 of the railway vehicle 100 at a contact surface with one corresponding rail 102, 103 of the railway track 101 while the at least one collecting tank 10 or each of the first and second collecting tanks 10A, 10B is collecting particulate matter.

In one possible embodiment, the least one temperature sensor 42 comprises or is constituted by an infrared sensor.

In figure 2, there are illustrated only two sensors 42 which are positioned at the front and back ends of the railway vehicle 100; clearly, it is possible to use a different number of sensors 42, e.g. one or more than two, suitably positioned along the railway vehicle 100.

In a possible embodiment, the one or more devices 40 comprises at least one three-axis accelerometer 44 which is configured to provide, for the at least one electronic control unit 30, signals indicative of at least one of the position, speed or acceleration of the railway vehicle 100 while the railway vehicle 100 travels along the railway track 101 while the at least one collecting tank 10 or each of the first and second collecting tanks 10A, 10B is collecting particulate matter.

In this way, the onboard electronic control unit 35 (or alternatively directly the trackside control unit or server 30), based on the signals provided by the accelerometer 44, and using a Kalman filter, can estimate the movement of the railway vehicle 100, such as the distance travelled, its speed, and its acceleration. A constant acceleration model can be used to propagate the states from one instant to another instant.

Usefully, the at least one electronic control unit 30 is further configured to calculate a predicted value of particulate matter $S_P$ that can be produced by the railway vehicle 100 in a future travel, along a track of a railway line, e.g. the same track 101 or any other, based on at least:

- the level of concentration of the collected particulate matter calculated for said travel or for said predetermined number of travels; and
- one or more calculated values for the one or more corresponding operating parameters of the railway vehicle 100 calculated for said travel or for each of said predetermined number of travels.

Data received and/or calculated by the electronic control unit 30 are stored in its trackside database 32.

The onboard traction/brake application database 120 stores data selected from the group comprising data related but not limiting to: identification data (ID) of the railway vehicle 100, time stamps, values of the temperatures of the wheel(s) as measured via the temperature sensor 42, speed of the railway vehicle as measured via the accelerometer 44 and the Kalman filter, load of the railway vehicle as provided by brake control electronics (BCE) 122, traction/braking effort achieved at the railway vehicle as provided from propulsion control electronics (PCE/BCE) 124.

In particular, in addition to the copy of data stored in the onboard database 120 of each railway vehicle monitored, the database 32 stores, for each monitored railway vehicle, like the vehicle 100, data selected from the group comprising data related but not limiting to: identification data (ID) of each railway vehicle for which the produced and collected particulate matter has been monitored via the at least one sensor 20; number of hours in various wheel temperature ranges (e.g. from 0°C to 50°C, from °50C to 100°C, from 100°C to 150°C, et cetera), as calculated in the respective onboard traction/brake application database 120; number of hours across multiple speed ranges (e.g. from 0 to 5 kmph, from 5 to 10 kmph, from 80 to 100 kmph, from 100 to 120 kmph, et cetera) as calculated in the respective onboard traction/brake application database 120; the average load of the relevant railway vehicle, as calculated in the respective onboard traction/brake application database 120; the total traction/braking effort achieved by each railway vehicle monitored, as calculated in the respective onboard traction/brake application database 120; the measured level(s) of concentration of particulate matter; the degraded wheel-rail contact wear data, based on which severity flags are generated, such as Category - 0 and 1. For example, if there is an immediate maintenance needs, the flag is set as Category-0, while Category-1 is assigned when there is an abnormal wear rate to be further monitored.

As those skilled in the art would easily appreciate, the above data can be stored in two or more different databases.

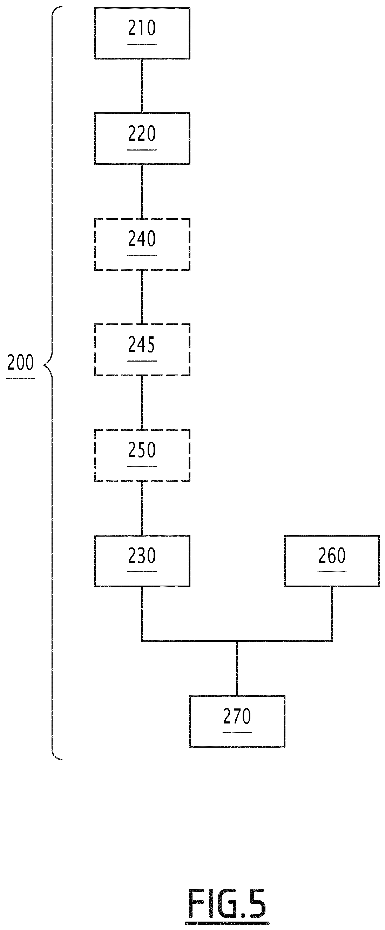

Figure 5 illustrates a method 200 for collecting and monitoring particulate matter (PM) produced by a railway vehicle while travelling along a railway track 101, which can be carried out for example in connection with and by the components of the system 1, and can execute all steps necessary to carry out the functionalities devised for the system 1 within the frame of the present invention.

In particular, the method 200 comprises at least the following steps:

210: collecting, by means of at least one collecting tank 10 suitable to be mounted on board of a railway vehicle 100, at least particulate matter produced by the railway vehicle 100 itself along the railway track 101 during one or more travels;

220: outputting, by means of at least one sensor 20 which is suitable to detect the particulate matter PM collected by the at least one collecting tank 10, signals $S_C$ indicative of the level of concentration of the particulate matter collected;

230: calculating, by at least one electronic control unit 30, based on the signals $S_C$ outputted by the at least one sensor 20, the level of concentration of the collected particulate matter produced by the railway vehicle 100 itself along the railway track 101 during said travel or during a predetermined number of travels.

In one embodiment, when the railway vehicle 100 is provided with a first tank 10A and a second tank 10 as above described, the step of collecting 210 comprises,

- collecting, during the one or more travels, particulate matter produced in real time by the railway vehicle 100 itself along the railway track 101 by means of the first tank 10A, and
- collecting, by means of the second collecting tank 10B, particulate matter previously deposited along the railway track 101.

In one possible embodiment, the method 200 further comprises:

240: connecting, for example directly or via the interconnecting conduit 51, a centralized disposal tank 50 to the at least one collecting tank 10 or to at least one of the first and second collecting tanks 10A, 10B;

245: causing, for example via the at least one electromagnet 54 and/or the air suction fan 56 previously described, particulate matter collected into a respective first or second storing chambers 12, 13 to flow into the centralized disposal tank 50; and

250: detecting, via the at least one sensor 20, positioned along the inlet 52 or along the conduit 51, at least in the level of concentration of particles collected in and flowing out from the first storing chamber 12 into the tank 50.

In one possible embodiment, the method 200 conveniently further comprises:

260: providing, by means of one or more devices 40 which are suitable to be mounted onboard of the railway vehicle 100, e.g. the previously mentioned temperature sensor 42 and accelerometer 44, signals indicative of values of one or more corresponding operative parameters of the railway vehicle (100) during the one or more travels.

As above indicated, such signals are indicative for example at least of the temperature at the wheel-rail contact interface and/or the speed of the railway vehicle 100.

In one possible embodiment, the method 200 further comprises:

270: calculating, by means of the at least one electronic control unit 30, a predicted value of particulate matter $S_P$ that can be produced by the railway vehicle 100 in a future travel along a track of a railway line, based on at least:

- the calculated level of concentration of the particulate matter (PM) produced by the railway vehicle (100) itself during said one or more travels; and
- one or more values for said of one or more corresponding operative parameters of the railway vehicle (100) calculated during said one or more travels.

In practice, in the system 1 and method 200 according to the invention, when the railway vehicle 100 starts a travel, depending on the travel direction, the first and second tanks 10A and 10B, are selectively activated, i.e. the one 10B at the front end of the railway vehicle to collect in its second storing chamber 13 only the residual particulate matter previously deposited along the track 101, while the other one, i.e. the tank 10A at the back end of the railway vehicle 100, collects in its first storing chamber 12 the wear particulate produced in real by the railway vehicle 100 itself during the travel.

Hence, both collecting tanks 10A and 10B will be always active to collect wear PM irrespective of the travel direction; clearly one storing chamber of each tank will collect only residual PM previously deposited which can be disposed out without the strict need of being monitored for the sake of evaluating the wear of a specific railway vehicle since it cannot be linked to any specific railway vehicle. The PM collected in the other chamber, can be monitored via the sensor 20, directly in real time or when the relevant tank is emptied.

At the same time, while the PM is being collected in the tanks, relevant data, such as the data of wheels temperature, train speed, trainload (from BCE), traction/braking effort achieved (from PCE/BCE) are measured and entered into the onboard traction/brake application database 120.

Depending on the applications, and on the storage capacity of each tank, after a predermined period of service time of a railway vehicle like the vehicle 100, e. g. at the end of a trip, or at the end of the trips in each day or after a certain number of trips over multiple days, the particulate collected, and in particular the one collected into the first storing chamber 12, i.e. that produced directly by the railway vehicle itself during the one or more travels, is analysed via the sensor 20 and the electronic control unit 30, thus determining the level of concentration of particulate matter produced, and in particular of ferruginous particulate matter.

As previously indicated, this phase can be executed when the collecting tank(s) are connected to and emptied into the centralized tank 50.

As the number of wheels can vary per each railway vehicle monitored, all data from different trains are preferably normalized with reference for instance to a standard or reference vehicle. For example, a standard vehicle can have four cars, hence four cars * two bogies(per car) * four wheels(per bogie) = thirty-two wheels. Another vehicle with six cars would have forty-eight wheels. Hence, the normalized measurement of the sensor 20 for an actual vehicle relative to the "reference vehicle" would be equal in the above example to the actual measured level of concentration concentration*(32/48).

Then, in the system according to the invention, the expected concentration in a next travel or for a predetermined future service time can be predicted using for example a Neural Network based prediction model running in the server 30, based on historical data related to wheel temperature, speed and/or acceleration of the vehicle, its load, traction/braking effort achieved.

For instance, the inputs to the neural network can be one or more of:

- number of hours in various wheel temperature ranges (e.g. from 0°C to 50°C, from 50°C to 100°C, from 100°C to 150°C, et cetera, as stored in the traction/brake application database 120;
- number of hours in various speed ranges (e.g. from 0 to 5 kmph, from 5 to 10 kmph, from 80 to 100 kmph, from 100 to 120 kmph, et cetera, as stored in the traction/brake application database 120;
- the total distance travelled during operations of the relevant railway vehicle, as stored in the traction/brake application database 120;
- average load during operations of the relevant railway vehicle, as stored in the traction/brake application database 120;
- total traction/braking effort achieved at the vehicle from as stored in the traction/brake application database 120.

Then, based on the calculations made by the neural network, the electronic cotrol unit 30 outputs a signal indicative of the predicted particulate matter $S_P$ that will be produced, due to the contact wheel(s)-rail(s), in the following travel or for a predetermined future service time.

The weights of the neural network for the prediction of the particulate matter producible PM Concentration Prediction will be the output during the tuning phase. NN weights can be properly adjusted during a training and/or tuning phase so the error between the predicted PM concentration $S_P$ and measured PM concentration $S_C$ is minimal within a desired threshold.

If there is a noticeable increase of the level of measured concentration of particulate matter produced $S_C$ vis-a-vis a predicted level $S_P$ beyond a tolerance value, it can be treated as an abnormal wheel-rail contact wear rate. This condition can be set as 'Category-1' for a certain duration. If this abnormal wear rate repeats for the specific vehicle for a longer period then Category is set as "0," and a signal for maintenance $S_M$ can be outputted so as to send such railway vehicle for a maintenance check of or intervention on its wheels. In any case, by comparing the level of particulate matter concentration produced by a railway vehicle during a predetermined period using the trend line, the wheel-rail contact wear rate can be derived, which can help to predict the right time for periodic maintenance.

In this way, it is possible to monitor a fleet of railway vehicles, e.g. those servicing a same line, and for example the vehicle having the highest production of particulate matter with the relative continuously increasing PM wear rate can be recommended for maintenance before others and even in advance with respect to a scheduled maintenance plan.

Hence, it is evident from the foregoing description that the system 1 and method 200 according to the present invention allow achieving the intended aim since they allow not only to continuously clean tracks from particulate matter but also to monitor in real time continuously or at least periodically the particulate matter produced by each railway vehicle monitored.

In this way, it possible to predict the trend of particulate matter that could be produced in future operations and to properly plan or even anticipate maintenance interventions, thus preventing for example that vehicles that can be particularly polluting enter into service before being properly serviced.

The system 1 and method 200 thus conceived are susceptible of modifications and variations, all of which are within the scope of the inventive concept as defined in particular by the appended claims; for example, the electronic unit 30 and/or the onboard control unit 35 can constituted by, or comprise, any suitable processor-based device, e.g. a processor of a type commercially available, suitably programmed and provided to the extent necessary with circuitry, in order to perform the innovative functionalities devised for the system 1 and method 200 according to the present invention; each of the databases previously described can be further populated with other data, et cetera.

All the details may furthermore be replaced with technically equivalent elements.

**Claims**

1. System (1) for collecting and monitoring particulate matter (PM) produced by a railway vehicle while travelling along a railway track (101), the system (1) being **characterized in that** it comprises at least:

    - at least one collecting tank (10) suitable to be mounted onboard of a railway vehicle (100), said at least one collecting tank (10) being arranged to collect at least particulate matter produced by the railway vehicle (100) itself along the railway track (101) during one or more travels;
    - at least one sensor (20) which is arranged to detect the particulate matter collected inside the at least one collecting tank (10) and to output signals ($S_C$) indicative of the level of concentration of the particulate matter collected during said one or more travels;
    - at least one electronic control unit (30) which is configured at least to calculate, based on the signals ($S_C$) outputted by the at least one sensor (20), the level of concentration of the particulate matter (PM) collected inside the at least one collecting tank (10) during said one or more travels.

2. System (1) according to claim 1, wherein the at least one collecting tank (10) comprises a first storing chamber (12) for storing particulate matter produced in real time by the railway vehicle (100) itself during said one or more travels, and a second storing chamber (13) for storing particulate matter previously deposited along the railway track (101), each of the first and second storing chambers (12, 13) being provided with respective first and second inlets (14 15; 16, 17) which can be activated for collecting each particulate matter from an associated rail (102, 103) of the railway track (101), and an outlet (18, 19) for periodically emptying the first and second storing chambers (12, 13) from the particulate matter collected therein in.

3. System (1) according to claim 2, wherein the at least one collecting tank (10) comprises a first collecting tank (10A) which is suitable to be mounted at a back end part of the railway vehicle (100) and is adapted to be activated and collect in its first storing chamber (12) particulate matter produced by the railway vehicle (100) itself along the railway track (101), and a second collecting tank (10B) which is suitable to be positioned at the front end part of the railway vehicle (100) and is arranged to be activated and collect, in its second storing chamber (13) particulate matter previously deposited along the railway track (101).

4. System (1) according to any one of the previous claims, wherein it further comprises one or more couples of side barriers (106) which are positioned along at least one portion of the railway track (101), the or each couple of side barriers (106) being arranged to delimit one or more containment areas (C) for holding therein particulate matter to be collected.

5. System (1) according to any one of the previous claims, wherein it further comprises:

    - at least one centralized disposal tank (50) having at least one inlet (52) which is adapted to be connected to a corresponding outlet (18, 19) of the at least one or of each of the first and second collecting tanks (10, 11) for receiving particulate matter collected therein; and
    - at least one further electromagnet (54) and an air suction fan (56) which are suitable to be positioned along said at least one inlet (52), said further electromagnet (54) and said air suction fan (56) being configured to cause flows of collected particulate matter from the respective first or second storing chambers (12, 13) into the centralized disposal tank (50).

6. System (1) according to any one of the previous claims, wherein said at least one sensor (20) comprises or is constituted by a planar inductive coil and is arranged to detect the level of concentration of ferruginous particles in the flows of particulate matter collected in and flowing out from at least the first storing chamber (12).

7. System (1) according to any one of the previous claims, wherein it further comprises one or more devices (40) which are suitable to be mounted onboard of the railway vehicle (100) and are adapted each to output signals indicative of values of one or more corresponding operative parameters of the railway vehicle (100) during said one or more travels while the at least one collecting tank (10) or each of the first and second collecting tanks (10A, 10B) is collecting particulate matter.

8. System (1) according to claim 7, wherein said one or more devices (40) comprises:

- at least one temperature sensor (42) which is adapted to detect, in a contactless manner and while the railway vehicle (100) travels along the railway track (101), values of the temperature of at least one wheel of the railway vehicle (100); and/or
- at least one three-axis accelerometer (44) which is configured to provide, while the railway vehicle (100) travels along the railway track (101), signals indicative of at least one of the position, speed or acceleration of the railway vehicle (100) during said one or more travels.

9. System (1) according to any one of claim7 8 to 8, wherein the at least one electronic control unit (30) is further configured to calculate a predicted value of particulate matter (PM) that can be produced by the railway vehicle (100) in a future travel or for a predetermined future service time along a railway line, based on at least:

- the calculated level of concentration of the particulate matter (PM) produced by the railway vehicle (100) itself during said one or more travels; and
- one or more values for said of one or more corresponding operative parameters of the railway vehicle (100) calculated during said one or more travels.

10. Method (200) for collecting and monitoring particulate matter produced by a railway vehicle while travelling along a railway track (101), the method (200) being **characterized in that** it comprises at least the following steps:

(210): collecting, by means of at least one collecting tank (10) suitable to be mounted on board of a railway vehicle (100), at least particulate matter produced by the railway vehicle (100) itself along the railway track (101) during said one or more travels;
(220): outputting, by means of at least one sensor (20) which is suitable to detect the particulate matter collected by the at least one collecting tank (10), signals ($S_C$) indicative of the level of concentration of the particulate matter collected;
(230): calculating, by at least one electronic control unit (30), based on the signals ($S_C$) outputted by the at least one sensor (20), the level of concentration of collected particulate matter produced by the railway vehicle (100) itself along the railway track (101) during said one or more travels.

FIG.1

FIG.2

FIG.3

FIG.4

**FIG.5**